# EUROPÄISCHE PATENTANMELDUNG

(11) **EP 3 239 084 A1**
(43) Veröffentlichungstag der Anmeldung: **01.11.2017**
(21) Anmeldenummer: 17168113.3
(22) Anmeldetag: 26.04.2017
(51) Int. Cl.: B65H 67/04, B65H 54/22, B65H 67/06, D01H 13/00, D01H 15/013, H01H 9/00, B65H 54/26

(54) **TEXTILMASCHINE SOWIE VERFAHREN ZUM BETREIBEN DERSELBEN**

(30) Priorität: 29.04.2016 DE 102016107994
(71) Anmelder: Rieter Ingolstadt GmbH, 85055 Ingolstadt (DE)
(72) Erfinder: Weidner-Bohnenberger, Stephan, 85051 Ingolstadt (DE)
(74) Vertreter: Baudler, Ron

(57) **Zusammenfassung**

Die Erfindung betrifft ein Verfahren zum Betreiben einer Textilmaschine (1) mit einer Vielzahl von gleichartigen Arbeitsstellen (2), wobei mit Hilfe der Arbeitsstellen (2) während eines Normalbetriebs derselben Garn hergestellt oder von einer Lieferspule auf eine Empfängerspule umgespult wird, und wobei der Normalbetrieb an den einzelnen Arbeitsstellen (2) in gewissen Zeitabständen unterbrochen und mit Hilfe eines Wartungsvorgangs wieder fortgesetzt wird, und wobei die Wartungsvorgänge von einer oder mehreren Wartungsvorrichtungen (3) durchgeführt werden. Erfindungsgemäß wird vorgeschlagen, dass für jede Arbeitsstelle (2) eine oder mehrere produktionsbezogene Kenngrößen bekannt sind oder ermittelt werden und dass dann, wenn mehr Wartungsvorgänge zeitgleich durchgeführt werden sollen als von der bzw. den Wartungsvorrichtungen (3) durchgeführt werden können, die Auswahl der als nächstes zu wartenden Arbeitsstelle (2) unter Berücksichtigung der produktionsbezogenen Kenngrößen derart erfolgt, dass ein anstehender Partiewechsel möglichst frühzeitig abgeschlossen wird.

## Beschreibung

Die vorliegende Erfindung betrifft ein Verfahren zum Betreiben einer Textilmaschine mit einer Vielzahl von gleichartigen Arbeitsstellen, wobei mit Hilfe der Arbeitsstellen während eines Normalbetriebs derselben Garn hergestellt oder von einer Lieferspule auf eine Empfängerspule umgespult wird, und wobei der Normalbetrieb an den einzelnen Arbeitsstellen in gewissen Zeitabständen unterbrochen und mit Hilfe eines Wartungsvorgangs wieder fortgesetzt wird, wobei die Wartungsvorgänge von einer oder mehreren Wartungsvorrichtungen durchgeführt werden.

Ferner betrifft die Erfindung eine Textilmaschine mit einer Vielzahl von gleichartigen Arbeitsstellen zum Herstellen von Garn oder zum Umspulen von Garn von einer Lieferspule auf eine Empfängerspule, mit einer oder mehreren Wartungsvorrichtungen.

Zu den gattungsgemäßen Textilmaschinen zählen sowohl Spulmaschinen als auch Spinnmaschinen, beispielsweise Ring-, Rotor- oder Luftspinnmaschinen. Üblicherweise weisen diese Textilmaschinen eine Vielzahl von gleichartigen Arbeitsstellen auf.

Im Normalbetrieb spulen die Spulmaschinen Garn von einer Lieferspule auf eine Empfängerspule und entfernen dabei vorzugsweise Garnfehler aus dem Garn. Spinnmaschinen stellen im Normalbetrieb Garn aus einem zugeführten Faserverband her.

Der Normalbetrieb dieser Textilmaschinen kann in gewissen Zeitabständen unterbrochen werden. Ein Grund für eine solche Unterbrechung ist ein sogenannter Garnbruch, also das Reißen des hergestellten bzw. umzuspulenden Garns. Ein weiterer Grund für eine Unterbrechung des Normalbetriebs ist das absichtliche Herausschneiden eines fehlerhaften Garnabschnitts, ein sogenannter Reinigerschnitt. Dieser kann durchgeführt werden, wenn das Garn nicht die gewünschte Qualität aufweist, beispielsweise weil es zu dick, zu dünn oder zu verschmutzt ist. Ebenfalls kommt es zu einer Unterbrechung des Normalbetriebs, wenn bei einer Arbeitsstelle die Lieferspule bzw. die den Faserverband bereitstellende Spule oder Kanne leer ist und gegen eine volle Lieferspule bzw. Spule oder Kanne ausgetauscht werden muss oder wenn eine vorgegebene Menge auf der aufnehmenden Empfängerspule aufgespult ist.

Je nach Textilmaschine und Grund der Unterbrechung gibt es im Prinzip drei Möglichkeiten, wie die jeweiligen Arbeitsstellen ihren Normalbetrieb wieder aufnehmen können: Im besten Fall verfügt jede einzelne Arbeitsstelle über eine Wartungsvorrichtung, ist also so weit automatisiert, dass sie die zum Wiederaufnehmen des Normalbetriebs nötigen Schritte selbst vornehmen kann. Eine solche Arbeitsstellenautomatisierung ist jedoch meist nur für die Behebung der am häufigsten vorkommenden Unterbrechungen, insbesondere die oben genannten Reinigerschnitte, wirtschaftlich rentabel. Für die Behebung einer Vielzahl der verbleibenden Unterbrechungen sind mobile Wartungsvorrichtungen vorgesehen, also Roboter, die zu den betroffenen Arbeitsstellen fahren bzw. gefahren werden und sodann einen Wartungsvorgang durchführen, also die nötigen Schritte vornehmen, damit die Arbeitsstelle den Normalbetrieb wieder aufnehmen kann. Schließlich kann es in bestimmten, komplizierteren Fällen notwendig sein, dass der Normalbetrieb der Arbeitsstelle durch Bedienpersonal wiederhergestellt wird.

Bei der vorliegenden Erfindung sind vor allem diejenigen Unterbrechungen des Normalbetriebs von Interesse, bei denen eine Wartungsvorrichtung den Normalbetrieb der Arbeitsstellen wiederherstellt. Dabei kann es vorkommen, dass mehr Wartungsvorgänge zeitgleich durchgeführt werden sollen als von der bzw. den Wartungsvorrichtungen durchgeführt werden können, weil beispielsweise nur eine begrenzte Anzahl an Wartungsvorrichtungen zur Verfügung steht oder weil Energieressourcen, wie Strom, Druckluft oder Unterdruck, nur in begrenztem Umfang zur Verfügung stehen. In diesem Fall werden verschiedene Strategien zur Abarbeitung der Wartungsvorgänge verfolgt: so können die Wartungsvorgänge nach der zeitlichen Reihenfolge des Auftretens der Unterbrechung durchgeführt werden. Oder die mobilen Wartungsvorrichtungen fahren entlang einer Reihe von Arbeitsstellen und führen an den Arbeitsstellen, an denen eine Unterbrechung des Normalbetriebs vorliegt, einen Wartungsvorgang durch. Effizientere Verfahren berücksichtigen darüber hinaus beispielsweise die Fahrwege und/oder -zeiten der mobilen Wartungsvorrichtungen um die Produktivität der Textilmaschine zu verbessern.

Aufgabe der vorliegenden Erfindung ist es, die Reihenfolge der Abarbeitung der Wartungsvorgänge noch effizienter zu gestalten und damit die Produktivität der Textilmaschine weiter zu verbessern.

Die Aufgabe wird gelöst durch ein Verfahren zum Betreiben einer Textilmaschine sowie eine Textilmaschine mit den Merkmalen der unabhängigen Patentansprüche.

Vorgeschlagen wird ein Verfahren zum Betreiben einer Textilmaschine mit einer Vielzahl von gleichartigen Arbeitsstellen. Dabei wird mit Hilfe der Arbeitsstellen während eines Normalbetriebs der Arbeitsstellen Garn hergestellt oder von einer Lieferspule auf eine Empfängerspule umgespult. Es handelt sich bei der Textilmaschine also um eine Spinnmaschine, beispielsweise eine Ring-, Rotor- oder Luftspinnmaschine, oder um eine Spulmaschine.

Der Normalbetrieb der Arbeitsstellen wird in gewissen Zeitabständen, beispielsweise auf Grund eines Garnbruchs, eines Reinigerschnitts oder einer leeren Lieferspule, Spule bzw. Kanne, unterbrochen. Er wird dann mit Hilfe eines Wartungsvorgangs wieder fortgesetzt. Je nach Grund der Unterbrechung des Normalbetriebs kann dies beispielsweise ein Ansetzvorgang, bei dem ein Garnende an eine leere oder schon teilweise bespulte Spule angesetzt wird, ein Garnverbindungsvorgang, auch Spleißvorgang genannt, bei dem zwei Garnenden miteinander verbunden werden, oder ein Spulen- bzw. Kannenwechselvorgang sein.

Im Sinne der vorliegenden Erfindung sind insbesondere diejenigen Wartungsvorgänge von Interesse, die von einer oder mehreren Wartungsvorrichtungen durchgeführt werden. Solche Wartungsvorrichtungen fahren zu der Arbeitsstelle, die einen Wartungsvorgang benötigt bzw. werden zu der Arbeitsstelle gefahren. Dort führen sie dann automatisch den Wartungsvorgang durch und fahren sodann zur nächsten Arbeitsstelle bzw. werden zu dieser gefahren. Dabei wird die Reihenfolge, in der die Arbeitsstellen angefahren und die Wartungsvorgänge abgearbeitet werden, in der Regel durch eine zentrale Steuereinheit bestimmt.

Erfindungsgemäß sind für jede Arbeitsstelle eine oder mehrere produktionsbezogene Kenngrößen bekannt oder die produktionsbezogenen Kenngrößen werden ermittelt. Wenn mehr Wartungsvorgänge zeitgleich durchgeführt werden sollen als von der bzw. den Wartungsvorrichtungen durchgeführt werden können, dann erfolgt die Auswahl der als nächstes zu wartenden Arbeitsstelle unter Berücksichtigung dieser produktionsbezogenen Kenngrößen derart, dass ein anstehender Partiewechsel möglichst frühzeitig abgeschlossen wird. Ein Partiewechsel ist dabei die Umstellung der Produktion auf die Herstellung bzw. Umspulung eines anderen Garns, d.h. eines Garns mit anderen Eigenschaften, wie beispielsweise Material, Dicke, Drall oder Oberflächenbehandlung. Wird nun der anstehende Partiewechsel frühzeitig abgeschlossen, so können alle Arbeitsstellen frühzeitig mit der Herstellung bzw. Umspulung des neuen Garns beginnen, so dass die Produktivität der gesamten Textilmaschine gesteigert ist.

Vorteilhafterweise sind als produktionsbezogene Kenngrößen der Produktionsfortschritt, die zu erwartende Produktionsgeschwindigkeit und/oder die zu erwartenden Wartungsvorgänge bekannt bzw. werden diese ermittelt. Der Produktionsfortschritt ist im Allgemeinen bekannt bzw. kann leicht durch eine Messung an der hergestellten Spule ermittelt werden. Auch die zu erwartende Produktionsgeschwindigkeit lässt sich leicht bestimmen, zum Beispiel als Mittelwert der Produktionsgeschwindigkeit über einen gewissen Zeitraum. Ebenso kann man die zu erwartenden Wartungsvorgänge an den jeweiligen Spinnstellen aus den angefallenen Wartungsvorgängen über einen gewissen Zeitraum hinweg bestimmen. Mit Hilfe dieser produktionsbezogenen Kenngrößen lässt sich die zu erwartende Produktion der einzelnen Arbeitsstellen bestimmen, so beispielsweise die zu erwartende Fertigstellung der aktuell hergestellten bzw. umgespulten Spule. Mit Hilfe dieser Informationen kann dann die Abarbeitung der Wartungsvorgänge durch die Wartungsvorrichtungen so gesteuert werden, dass ein anstehender Partiewechsel möglichst frühzeitig abgeschlossen und somit die Produktivität der Textilmaschine gesteigert ist.

Es ist von Vorteil, wenn der Partiewechsel an allen oder nur an einem Teil der Arbeitsstellen der Textilmaschine durchgeführt wird. So lässt sich in Abhängigkeit von der Auftragsgröße und/oder den Möglichkeiten der Textilmaschine, also in wie weit sie die Herstellung von unterschiedlichen Fäden an Teilen der Arbeitsstellen unterstützt, stets die bestmögliche und effizienteste Lösung finden.

Um die bestmögliche Reihenfolge der Abarbeitung der Wartungsvorgänge zu bestimmen ist es vorteilhaft, wenn jeder Arbeitsstelle ein Wunschtermin zugeordnet wird, bis zu dem die Arbeitsstelle idealerweise die aktuelle Produktion fertiggestellt haben sollte. Dieser Wunschtermin wird dann bei der Abarbeitung der Wartungsvorgänge als Ziel angestrebt.

Von Vorteil ist es, wenn jeder Arbeitsstelle der gleiche Wunschtermin zugeordnet wird. Dies ist insbesondere bei den Textilmaschinen von Vorteil, bei denen das Doffen, also das Wechseln der Spulen, und damit auch der Partiewechsel an allen Arbeitsstellen gleichzeitig stattfinden. In dem Fall ist es naheliegend, dass die höchste Produktivität der Textilmaschine erzielt wird, wenn die Arbeitsstellen ihre laufende Produktion möglichst zum gleichen Zeitpunkt abschließen. So wird vermieden, dass einzelne Arbeitsstellen eine lange Zeit stillstehen während sie darauf warten, dass die anderen Arbeitsstellen fertig werden und der Partiewechsel durchgeführt werden kann.

Bei Textilmaschinen, bei denen der Partiewechsel nicht gleichzeitig für alle Arbeitsstellen stattfindet, sondern von einem oder mehreren Doff-Robotern für jede Arbeitsstelle separat durchgeführt wird, ist ein gemeinsamer Wunschtermin für alle Arbeitsstellen nicht die optimale Lösung. Vorteilhaft ist es in diesem Fall vielmehr, wenn zunächst ein geplanter Fahrplan des bzw. der Doff-Roboter(s) erstellt wird. Dieser Fahrplan weist für jede Arbeitsstelle genau einen Stopp von einem der Doff-Roboter auf und wird vorzugsweise unter Berücksichtigung der produktionsbezogenen Kenngrößen der Arbeitsstellen erstellt: Arbeitsstellen, die voraussichtlich später fertig werden, werden gemäß dem geplanten Fahrplan auch erst später von dem Doff-Roboter angefahren. Sodann wird jeder Arbeitsstelle ein Wunschtermin zugeordnet, der dem Stopp des Doff-Roboters an dieser Arbeitsstelle gemäß dem geplanten Fahrplan entspricht. Diese Wunschtermine berücksichtigen also auch den Partiewechsel durch den bzw. die Doff-Roboter und tragen folglich zur Steigerung der Produktivität der Textilmaschine bei.

Es ist von Vorteil, wenn für jede Arbeitsstelle unter Berücksichtigung der produktionsbezogenen Kenngrößen ein zu erwartender Fertigstellungstermin, bis zu dem die Arbeitsstelle voraussichtlich die aktuelle Produktion fertiggestellt haben wird, ermittelt wird. Dies ist also der zu erwartende Fertigstellungstermin ohne Berücksichtigung des anstehenden Partiewechsels. Um nun den anstehenden Partiewechsel zu berücksichtigen wird eine Wartungspriorität für die Durchführung eines Wartungsvorgangs an einer Arbeitsstelle umso höher gesetzt, je größer die Differenz zwischen dem zu erwartenden Fertigstellungstermin und dem Wunschtermin ist. Hierbei ist es auch möglich, dass diese Differenz negativ ist und somit die Wartungspriorität der betreffenden Arbeitsstelle herabgesetzt wird. Es werden also die Arbeitsstellen, die im Vergleich zu den anderen Arbeitsstellen Zeit aufholen müssen, im Hinblick auf die Durchführung der Wartungsvorgänge bevorzugt behandelt, während Arbeitsstellen, die dem Zeitplan voraus sind, bei der Durchführung der Wartungsvorgänge benachteiligt werden. Insgesamt ergibt sich daraus eine effizientere Ausnutzung der zur Verfügung stehenden Ressourcen.

Vorteilhafterweise werden unter Berücksichtigung der Wartungsprioritäten die Wunschtermine für die Arbeitsstellen neu bestimmt, wobei gegebenenfalls - ebenfalls unter Berücksichtigung der Wartungsprioritäten - die geplanten Fahrpläne der Doff-Roboter neu erstellt werden. Ferner werden die zu erwartenden Fertigstellungstermine unter Berücksichtigung der Wartungsprioritäten neu ermittelt. Auf Basis der neu ermittelten Wunschtermine und zu erwartenden Fertigstellungstermine werden dann neue Wartungsprioritäten gesetzt, die wiederum umso höher sind, je größer die Differenz zwischen dem zu erwartenden Fertigstellungstermin und dem Wunschtermin ist. Mit den so angepassten Wartungsprioritäten werden die zur Verfügung stehenden Ressourcen noch besser ausgenutzt und damit die Produktivität der Textilmaschine weiter gesteigert.

Dies kann noch weiter verbessert werden, in dem die oben angegebenen Verfahrensschritte iterativ wiederholt werden, also unter Berücksichtigung der neuen Wartungsprioritäten nochmals neue Wunschtermine und neue zu erwartende Fertigstellungstermine ermittelt werden und die Differenz dieser Termine zu noch neueren Wartungsprioritäten führt. Die Anzahl der Iterationsschritte kann dabei fest vorgegeben werden oder es können so viele Iterationen durchgeführt werden bis die Erhöhung der Produktivität vom einen zum nächsten Iterationsschritt einen gewissen Wert unterschreitet.

Wenn die Differenz zwischen dem zu erwartenden Fertigstellungstermin und dem Wunschtermin einen ersten vorbestimmten Wert überschreitet oder einen zweiten vorbestimmten Wert unterschreitet ist es von Vorteil, wenn die Produktionsgeschwindigkeit an diesen Arbeitsstellen zeitweise erhöht bzw. erniedrigt wird. Durch eine zeitweise Erhöhung der Produktionsgeschwindigkeit an einzelnen Arbeitsstellen kann unter Inkaufnahme beispielsweise des damit einhergehenden höheren Energieverbrauchs die Produktivität der Textilmaschine gesteigert werden. Durch eine zeitweise Erniedrigung der Produktionsgeschwindigkeit hingegen kann beispielsweise Energie gespart werden und/oder die Wahrscheinlichkeit von Garnbrüchen gesenkt werden, was wiederum der Gesamtwirtschaftlichkeit bzw. -produktivität der Textilmaschine zu Gute kommt.

Schließlich ist es vorteilhaft, wenn der Partiewechsel auch dann durchgeführt wird, wenn einzelne Arbeitsstellen noch nicht die aktuelle Produktion fertiggestellt haben, sofern dies für die Produktivität der Textilmaschine von Vorteil ist. Dies kann beispielsweise dann der Fall sein, wenn bei einer oder einigen wenigen Arbeitsstellen nach Einleitung des Partiewechsels eine Unterbrechung des Normalbetriebs aufgetreten ist, die eine Wartung durch das Bedienpersonal zur Folge hat und diese Wartung nicht zeitnah durchgeführt werden kann. Dann liegt bzw. liegen diese Arbeitsstelle(n) mit dem Produktionsfortschritt weit hinter den anderen Arbeitsstellen zurück und es wäre für die Produktivität der Textilmaschine von Nachteil, wenn mit dem Partiewechsel auf diese Arbeitsstelle(n) gewartet werden würde.

Das genannte Verfahren wird gemäß der vorangegangenen Beschreibung durchgeführt, wobei die genannten Merkmale einzeln oder in beliebiger Kombination verwirklicht werden können.

Vorgeschlagen wird ferner eine Textilmaschine mit einer Vielzahl von gleichartigen Arbeitsstellen zum Herstellen von Garn oder zum Umspulen von Garn von einer Lieferspule auf eine Empfängerspule. Es handelt sich bei der Textilmaschine also um eine Spinnmaschine, beispielsweise eine Ring-, Rotor- oder Luftspinnmaschine, oder eine Spulmaschine. Ferner weist die Textilmaschine eine oder mehrere Wartungsvorrichtungen auf. Diese Wartungsvorrichtungen sind dazu ausgebildet, an den einzelnen Arbeitsstellen anfallende Wartungsvorgänge, beispielsweise Ansetzvorgänge, Garnverbindungsvorgänge, oder Spulen- bzw. Kannenwechselvorgänge, automatisch auszuführen. Dazu können die Wartungsvorrichtungen zu den Arbeitsstellen fahren bzw. zu diesen gefahren werden.

Erfindungsgemäß weist die Textilmaschine eine Steuereinheit auf oder steht mit einer Steuereinheit in Wirkverbindung. Dabei ist die Steuereinheit so ausgelegt, dass sie die Textilmaschine gemäß dem oben beschriebenen Verfahren betreibt. Insbesondere wählt die Steuereinheit also die als nächstes zu wartende Arbeitsstelle so aus, dass ein anstehender Partiewechsel möglichst frühzeitig abgeschlossen wird. So wird die Gesamtproduktivität und Wirtschaftlichkeit der Textilmaschine gesteigert.

Weitere Vorteile der Erfindung sind im nachfolgenden Ausführungsbeispiel beschrieben. Es zeigen:
- **Figur 1a**: eine schematische Draufsicht einer erfindungsgemäßen Textil-maschine,
- **Figur 1b**: eine schematische Draufsicht der Textilmaschine aus Figur 1a während eines Partiewechsels und
- **Figur 2**: ein Flussdiagramm für die Ermittlung der Wartungsprioritäten.

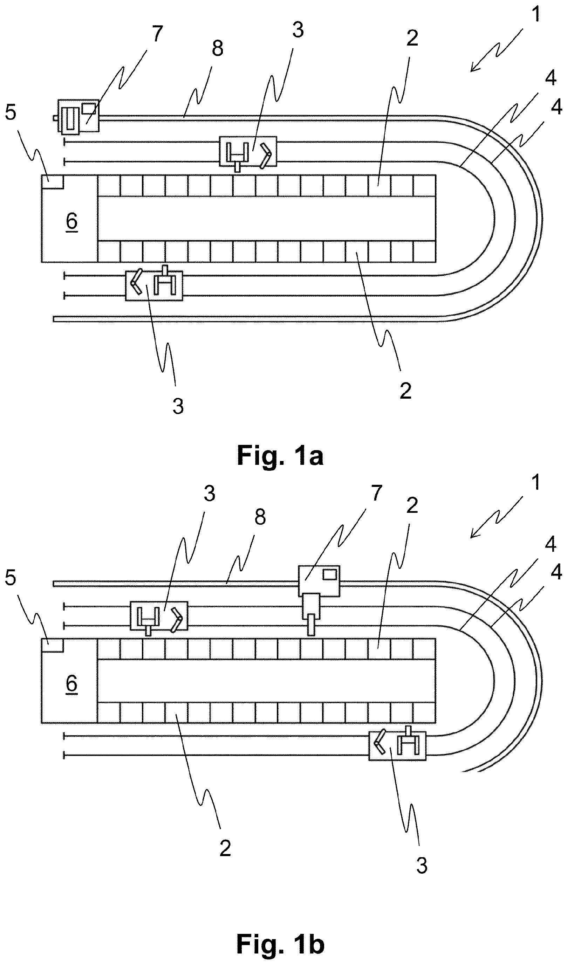

Figur 1a zeigt eine erfindungsgemäße Textilmaschine 1 mit einer Vielzahl von Arbeitsstellen 2 (wobei aus Übersichtsgründen nur zwei davon mit einem Bezugszeichen versehen sind). Jede dieser Arbeitsstellen 2 ist dazu ausgebildet, während eines Normalbetriebs Garn herzustellen oder von einer Lieferspule auf eine Empfängerspule umzuspulen. Es handelt sich bei der Textilmaschine 1 also um eine Spinnmaschine, beispielsweise eine Ring-, Rotor- oder Luftspinnmaschine, oder um eine Spulmaschine.

Ferner weist die Textilmaschine 1 zwei Wartungsvorrichtungen 3 auf. Tritt bei einer Arbeitsstelle 2 eine Unterbrechung des Normalbetriebs auf, so können die Wartungsvorrichtungen 3 auf Schienen 4 zu dieser Arbeitsstelle 2 fahren und mit Hilfe eines Wartungsvorgangs den Normalbetrieb an dieser Arbeitsstelle 2 wieder fortsetzen. Zu den möglichen Wartungsvorgängen zählen beispielsweise Ansetzvorgänge, bei denen ein Garnende an eine leere oder nur teilweise bespulte Spule angesetzt wird, Garnverbindungsvorgänge, bei denen zwei Garnenden miteinander verbunden werden, oder Spulen- bzw. Kannenwechselvorgänge, bei denen eine leere Lieferspule bzw. eine leere Kanne gegen eine volle getauscht wird.

Die Wartungsvorrichtungen 3 werden von einer zentralen Steuereinheit 5, die sich an einem Maschinenende 6 der Textilmaschine 1 befinden kann, gesteuert. Wenn mehr Wartungsvorgänge zeitgleich durchzuführen sind als von den Wartungsvorrichtungen 3 durchgeführt werden können, dann wählt die Steuereinheit 5 die als nächstes zu wartende Arbeitsstelle 2 unter Berücksichtigung von produktionsbezogenen Kenngrößen der Arbeitsstelle 2 und von Fahrwegen und -zeiten der Wartungsvorrichtungen 3 derart aus, dass die Produktivität der Textilmaschine maximiert wird.

Des Weiteren steuert die Steuereinheit 5 einen Doff-Roboter 7, der auf den Schienen 8 zu den einzelnen Arbeitsstellen 2 fahren kann. Bei einem Partiewechsel, also einem Wechsel auf die Produktion von einem Garn mit anderen Eigenschaften, wie beispielsweise Material, Dicke, Drall oder Oberflächenbehandlung, tauscht der Doff-Roboter 7 die Spulen. In Figur 1a findet kein Partiewechsel statt und der Doff-Roboter 7 befindet sich an einem Ende der Schienen 8 in einer Parkposition.

Die hier gezeigten Schienenbögen der Schienen 4 und der Schienen 8 ermöglichen es den Wartungsvorrichtungen 3 bzw. dem Doff-Roboter 7, Arbeitsstellen 2 auf beiden Maschinenseiten zu erreichen. Solche Schienenbögen sind optional und können aus Kosten- oder Platzgründen auch weggelassen werden. In diesem Fall sind pro Maschinenseite mindestens eine Wartungsvorrichtung 3 bzw. mindestens ein Doff-Roboter 7 erforderlich. Die Wartungsvorrichtung 3 bzw. der Doff-Roboter 7 kann dann von der Steuereinheit 5 auch nur für die Maschinenseite eingeplant werden, der sie bzw. er zugeordnet ist.

In Figur 1 b wird die Textilmaschine 1 aus Figur 1a während eines Partiewechsels gezeigt. Nun ist der Doff-Roboter 7 in Betrieb und führt den Partiewechsel an denjenigen Arbeitsstellen 2 durch, die die aktuelle Produktion schon beendet haben. An den anderen Arbeitsstellen 2 läuft derweil die Produktion der Fäden mit den originalen Eigenschaften weiter. Sollte es zu Unterbrechungen des Normalbetriebs an diesen Arbeitsstellen 2 kommen, so beauftragt die Steuereinheit 5 eine Wartungsvorrichtung 3 damit, einen Wartungsvorgang an der Arbeitsstelle 2 durchzuführen, so dass die Arbeitsstelle 2 den Normalbetrieb wieder aufnehmen kann.

Sollten mehr Wartungsvorgänge zeitgleich durchgeführt werden müssen als von den Wartungsvorrichtungen 3 durchgeführt werden können, dann wählt die Steuereinrichtung 5 die als nächstes zu wartende Arbeitsstelle 2 unter Berücksichtigung von produktionsbezogenen Kenngrößen der Arbeitsstellen 2 derart aus, dass der Partiewechsel möglichst frühzeitig abgeschlossen und damit die Produktivität der Textilmaschine 1 gesteigert wird. Die produktionsbezogenen Kenngrößen sind dabei der Produktionsfortschritt, die zu erwartende Produktionsgeschwindigkeit und die zu erwartenden Wartungsvorgänge. Sie werden vorzugsweise von der Steuereinheit 5 laufend für alle Arbeitsstellen 2 ermittelt.

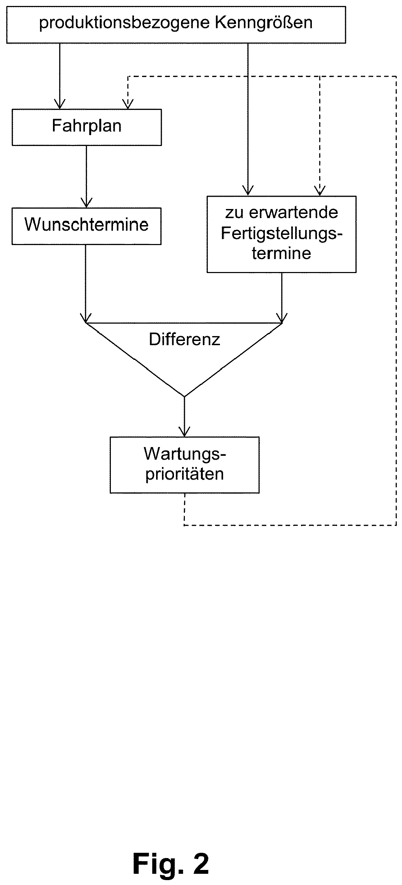

Die Auswahl der als nächstes zu wartenden Arbeitsstelle 2 wird an Hand eines in Figur 2 dargestellten Flussdiagramms erläutert. Unter Berücksichtigung der produktionsbezogenen Kenngrößen erstellt die Steuereinheit 5 einen zu erwartenden Fahrplan für den Doff-Roboter 7. Dabei bedient der Doff-Roboter 7 jede Arbeitsstelle 2 genau einmal. Die Stopps des Doff-Roboters 7 an jeder Arbeitsstelle 2 werden als Wunschtermine für die jeweilige Arbeitsstelle 2 gesetzt.

Unter Berücksichtigung der produktionsbezogenen Kenngrößen werden zudem die zu erwartenden Fertigstellungstermine für die einzelnen Arbeitsstellen 2 berechnet. Sodann wird für jede Arbeitsstelle 2 die Differenz zwischen dem zu erwartenden Fertigstellungstermin und dem Wunschtermin gebildet. Auf Grund dieser Differenz werden die Wartungsprioritäten für die Arbeitsstellen 2 gesetzt, und zwar sind die Wartungsprioritäten umso höher, je größer die Differenz ist.

Um die Ermittlung der Wartungsprioritäten weiter zu verbessern und damit den Partiewechsel noch frühzeitiger abzuschließen, werden der Fahrplan des Doff-Roboters 7, die daraus resultierenden Wunschtermine sowie die zu erwartenden Fertigstellungstermine unter zusätzlicher Berücksichtigung der soeben bestimmten Wartungsprioritäten neu bestimmt. Dies ist in Figur 2 durch die gestrichelten Linien angedeutet. Sodann wird die Differenz zwischen dem zu erwartenden Fertigstellungstermin und dem Wunschtermin neu berechnet und die Wartungsprioritäten dementsprechend aktualisiert.

Diese Prozedur wird nun so lange iterativ wiederholt bis eine vorgegebene Anzahl an Iterationen erreicht wird oder bis die Verbesserung der Produktivität von einem Iterationsschritt zum nächsten einen vorgegebenen Wert unterschreitet.

Die vorliegende Erfindung ist nicht auf das beschriebene Ausführungsbeispiel beschränkt und kann im Rahmen der Patentansprüche abgewandelt werden.

### Bezugszeichenliste

- 1: Textilmaschine
- 2: Arbeitsstellen
- 3: Wartungsvorrichtungen
- 4: Schienen
- 5: Steuereinheit
- 6: Maschinenende
- 7: Doff-Roboter
- 8: Schienen

## Patentansprüche

1. Verfahren zum Betreiben einer Textilmaschine (1) mit einer Vielzahl von gleichartigen Arbeitsstellen (2),
- wobei mit Hilfe der Arbeitsstellen (2) während eines Normalbetriebs derselben Garn hergestellt oder von einer Lieferspule auf eine Empfängerspule umgespult wird, und
- wobei der Normalbetrieb an den einzelnen Arbeitsstellen (2) in gewissen Zeitabständen unterbrochen und mit Hilfe eines Wartungsvorgangs wieder fortgesetzt wird, und
- wobei die Wartungsvorgänge von einer oder mehreren Wartungsvorrichtungen (3) durchgeführt werden,
**dadurch gekennzeichnet, dass**
für jede Arbeitsstelle (2) eine oder mehrere produktionsbezogene Kenngrößen bekannt sind oder ermittelt werden und dass dann, wenn mehr Wartungsvorgänge zeitgleich durchgeführt werden sollen als von der bzw. den Wartungsvorrichtungen (3) durchgeführt werden können, die Auswahl der als nächstes zu wartenden Arbeitsstelle (2) unter Berücksichtigung der produktionsbezogenen Kenngrößen derart erfolgt, dass ein anstehender Partiewechsel möglichst frühzeitig abgeschlossen wird.

2. Verfahren nach dem vorherigen Anspruch, **dadurch gekennzeichnet, dass** als produktionsbezogene Kenngrößen der Produktionsfortschritt, die zu erwartende Produktionsgeschwindigkeit und/oder die zu erwartenden Wartungsvorgänge bekannt sind oder ermittelt werden.

3. Verfahren nach einem der vorherigen Ansprüche, **dadurch gekennzeichnet, dass** der Partiewechsel an allen oder nur an einem Teil der Arbeitsstellen (2) der Textilmaschine (1) durchgeführt wird.

4. Verfahren nach einem der vorherigen Ansprüche, **dadurch gekennzeichnet, dass** jeder Arbeitsstelle (2) ein Wunschtermin zugeordnet wird, bis zu dem die Arbeitsstelle (2) idealerweise die aktuelle Produktion fertiggestellt haben sollte.

5. Verfahren nach einem der vorherigen Ansprüche, **dadurch gekennzeichnet, dass** jeder Arbeitsstelle (2) der gleiche Wunschtermin zugeordnet wird.

6. Verfahren nach einem der vorherigen Ansprüche, **dadurch gekennzeichnet, dass**, vorzugsweise unter Berücksichtigung der produktionsbezogenen Kenngrößen der Arbeitsstellen (2), ein geplanter Fahrplan, vorzugsweise von einem oder mehreren für den Partiewechsel zuständigen Doff-Robotern (7), erstellt wird, wobei der geplante Fahrplan für jede Arbeitsstelle (2) genau einen Stopp von einem der Doff-Roboter (7) aufweist, und jeder Arbeitsstelle (2) ein Wunschtermin zugeordnet wird, der dem Stopp des Doff-Roboters (7) an dieser Arbeitsstelle (2) gemäß dem geplanten Fahrplan entspricht.

7. Verfahren nach einem der vorherigen Ansprüche, **dadurch gekennzeichnet, dass** für jede Arbeitsstelle (2) unter Berücksichtigung der produktionsbezogenen Kenngrößen ein zu erwartender Fertigstellungstermin, bis zu dem die Arbeitsstelle (2) voraussichtlich die aktuelle Produktion fertiggestellt haben wird, ermittelt wird und eine Wartungspriorität für die Durchführung eines Wartungsvorgangs an einer Arbeitsstelle (2) umso höher gesetzt wird, je größer die Differenz zwischen dem zu erwartenden Fertigstellungstermin und dem Wunschtermin ist.

8. Verfahren nach einem der vorherigen Ansprüche, **dadurch gekennzeichnet, dass** unter Berücksichtigung der Wartungsprioritäten die Wunschtermine für die Arbeitsstellen (2) neu bestimmt werden, wobei gegebenenfalls die geplanten Fahrpläne der Doff-Roboter (7) neu erstellt werden, die zu erwartenden Fertigstellungstermine neu ermittelt werden und neue Wartungsprioritäten gesetzt werden, die umso höher sind, je größer die Differenz zwischen dem zu erwartenden Fertigstellungstermin und dem Wunschtermin ist, und wobei die zuvor genannten Verfahrensschritte vorzugsweise iterativ wiederholt werden.

9. Verfahren nach einem der vorherigen Ansprüche, **dadurch gekennzeichnet, dass** die Produktionsgeschwindigkeit an Arbeitsstellen (2) zeitweise erhöht oder erniedrigt wird, wenn die Differenz zwischen dem zu erwartenden Fertigstellungstermin und dem Wunschtermin einen ersten vorbestimmten Wert überschreitet bzw. einen zweiten vorbestimmten Wert unterschreitet.

10. Verfahren nach einem der vorherigen Ansprüche, **dadurch gekennzeichnet, dass** der Partiewechsel durchgeführt wird, auch wenn einzelne Arbeitsstellen (2) noch nicht die aktuelle Produktion fertiggestellt haben, sofern dies für die Produktivität der Textilmaschine (1) von Vorteil ist.

11. Textilmaschine mit einer Vielzahl von gleichartigen Arbeitsstellen (2) zum Herstellen von Garn oder zum Umspulen von Garn von einer Lieferspule auf eine Empfängerspule, mit einer oder mehreren Wartungsvorrichtungen (3),
**dadurch gekennzeichnet, dass**
die Textilmaschine (1) eine Steuereinheit (5) aufweist oder mit einer Steuereinheit (5) in Wirkverbindung steht, die ausgelegt ist, die Textilmaschine (1) gemäß einem oder mehreren der vorangegangenen Ansprüche zu betreiben.
